(19) Europäisches Patentamt
European Patent Office
Office européen des brevets

(11) Veröffentlichungsnummer: **0 207 890**
**B1**

(12) **EUROPÄISCHE PATENTSCHRIFT**

(45) Veröffentlichungstag der Patentschrift: **14.03.90**

(21) Anmeldenummer: **86810245.0**

(22) Anmeldetag: **05.06.86**

(51) Int. Cl.⁵: **C 07 F 9/30**, C 07 F 9/38, C 07 F 9/40, C 07 F 9/53, A 01 N 57/22

(54) **Mikrobizide Mittel.**

(30) Priorität: **11.06.85 CH 2462/85**

(43) Veröffentlichungstag der Anmeldung:
**07.01.87 Patentblatt 87/02**

(45) Bekanntmachung des Hinweises auf die Patenterteilung:
**14.03.90 Patentblatt 90/11**

(84) Benannte Vertragsstaaten:
**AT BE CH DE FR GB IT LI LU NL SE**

(56) Entgegenhaltungen:
**EP-A-0 103 867**
**EP-A-0 153 284**
**PL-A- 112 691**
**US-A-4 379 146**
**US-A-4 431 438**

**AGRICULTURAL AND BIOLOGICAL CHEMISTRY, Band 37, Nr. 5, 1973, Seiten 1193-1195; S. ASANO et al.: "The synthesis of alpha-amino phosphonic acids"**

(73) Patentinhaber: **CIBA-GEIGY AG**
**Klybeckstrasse 141**
**CH-4002 Basel (CH)**

(72) Erfinder: **Maier, Ludwig, Dr.**
**Suryhofweg 24**
**CH-4144 Arlesheim (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 207 890 B1

**Beschreibung**

Die vorliegende Erfindung betrifft mikrobizide Mittel enthaltend als mindestens einen Wirkstoff ein 1-Amino-2-aryl-ethanphosphonsäure- oder -ethanphosphinsäure- Derivat der Formel I oder ein Salz davon, ferner die Herstellung und die Verwendung dieser Wirkstoffe zur Bekämpfung von schädlichen Mikroorganismen.

Die Verbindungen gemäss vorliegender Erfindung haben die Formel

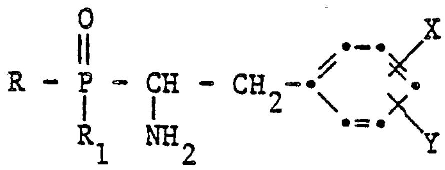

(I),

worin

R $C_1$—$C_4$Alkyl oder OH,

$R_1$ OH,

X Wasserstoff, Halogen, $C_1$—$C_4$Alkyl, $C_1$—$C_4$Alkoxy, $Si(CH_3)_3$, —CN, —$COOCH_3$ oder —$CH_2$—$CH(NH_2)$-$P(O)(R)(R_1)$, und

Y Wasserstoff, Halogen, Halogenmethoxy, Halogenethoxy oder Halogenmethyl

bedeuten, und schliessen entsprechende Salze ein.

In der Formel I liegen Ethanphosphonsäure-Derivate vor, wenn R und $R_1$ Hydroxy bedeuten. Ethanphosphinsäure-Derivate liegen vor, wenn der Substituent R Alkyl bedeutet.

$C_1$—$C_4$Alkyl allein oder als Teil einer Alkoxygruppe bedeutet Methyl, Ethyl, Propyl, Isopropyl, n-Butyl, sek.Butyl, Isobutyl oder tert.Butyl.

Unter Halogen wird Fluor, Chlor, Brom oder Jod verstanden. $C_1$—$C_2$Halogenalkyl als Teil einer Halogenalkoxy-Gruppe oder Halogenmethyl bedeuten eine Methyl- bzw. Ethylgruppe, die einfach halogeniert ist oder durch ein bestimmtes Halogenatom oder durch verschiedene Halogenatome mehrfach oder perhalogeniert ist. Als Beispiele seien $CHCl_2$, $CHF_2$, $CH_2Cl$, $CCl_3$, $CH_2F$, $CHBr_2$, $CH_2CH_2Cl$, $CHCl$—$CHCl$, $CF_3$, $C_2F_5$, $CF_2Cl$, $CF_2$—$CF_2Cl$ genannt.

Als Salze einer freien HO-Gruppe kommen gegebenfalls substituierte Ammonium- oder Hydraziniumsalze oder Metallkationen in Frage.

Als Metallionen kommen z.B. die Kationen folgender Elemente in Frage: Alkalimetalle wie Lithium, Natrium oder Kalium; Erdalkalimetalle wie Magnesium, Calcium, Strontium oder Barium; Elemente der ersten bis achten Nebengruppe wie Chrom, Mangan, Eisen, Kobalt, Nickel, Kupfer, Zink, Silber, insbesondere Eisen, Mangan, Kupfer und Zink; Elemente der dritten und vierten Hauptgruppe wie Aluminium, Silicium, Zinn, Blei, Zircon, Titan, insbesondere Aluminium, wobei die Metallionen in den Salzen bzw. Komplexen der Formel I in den ihnen zukommenden Wertigkeiten vorliegen.

Phosphonsäure-Derivate der Formel I lassen sich prinzipiell durch Reaktion von einem gegebenfalls substituierten 2-Phenylacetaldehyd mit Ammoniak und Dialkylphosphit gewinnen, unter anschliessender Hydrolyse mit Mineralsäure:

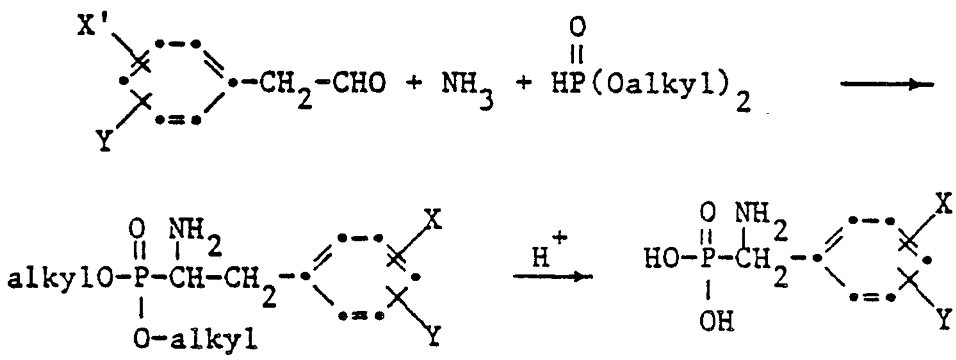


[Chalmers and Kosolapoff, J.Am.Chem.Soc. 75, 5278 (1953)].

Unter Mineralsäuren sind in erster Linie Halogenwasserstoffsäuren wie Chlor- oder Bromwasserstoffsäure, Schwefelsäure, Phosphorsäure, Salpetersäure, Toluolsulfonsäure u.a. zu verstehen.

Eine etwas allgemeinere Methode ist die von Berlin et al. [J. Org. Chem. *33*, 3090 (1968)] vorgeschlagene, bei der ein substituiertes Phenylacetylhalogenid mit wahlweise a) O,O,O-Trialkylphosphit

oder b) O,O-Trialkylphosphonit zur Reaktion gebracht und in Gegenwart von Hydroxylamin zum Phosphonyl- bzw. Phosphinyl- oxim umgesetzt wird, aus dem sich durch Hydrierung das Amin gewinnen lässt:

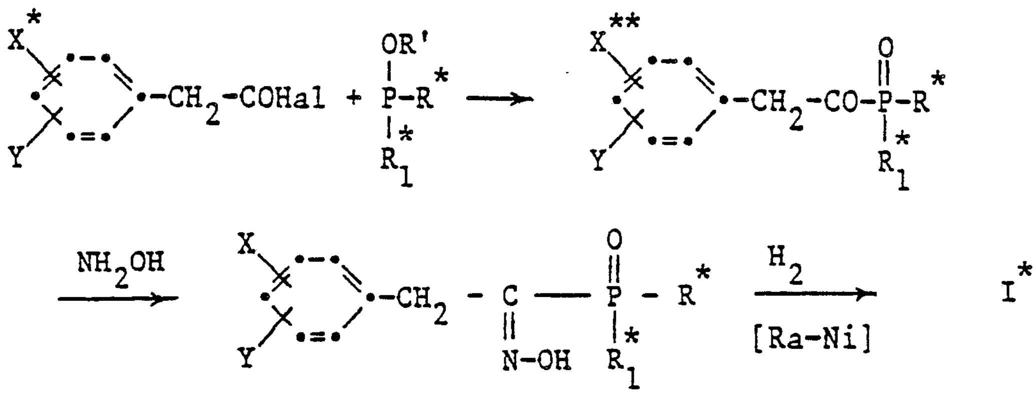


In den vorgenannten Formelbildern haben X und Y die für Formel I gegebene Bedeutung; ferner ist
X' = H, Halogen, $C_1$—$C_4$Alkyl, $C_1$—$C_4$Alkoxy, $Si(CH_3)_3$, —CN, —$COOCH_3$ oder —$CH_2$—CHO,
alkyl = $C_1$—$C_4$Alkyl,
X* = H, Halogen, $C_1$—$C_4$Alkyl, $C_1$—$C_4$Alkoxy, $Si(CH_3)_3$, —CN, —$COOCH_3$ oder —$CH_2$—COHal,
X** = H, Halogen, $C_1$—$C_4$Alkyl, $C_1$—$C_4$Alkoxy, $Si(CH_3)_3$, —CN, —$COOCH_3$ oder —$CH_2$—C(O)—P(O) $R^*(R_1^*)$,
Hal = Halogen, bevorzugt Cl oder Br,
R' = $C_1$—$C_4$Alkyl,
R* = $C_1$—$C_4$Alkyl oder $C_1$—$C_4$Alkoxy,
$R_1^*$ = $C_1$—$C_4$Alkoxy.

Die Formel I* umfasst nur solche Verbindungen der Formel I, worin R und $R_1$ die Bedeutung von R* und $R_1^*$ haben. Sofern R* und/oder $R_1^*$ $C_1$—$C_4$Alkoxy bedeuten, lassen sich aus diesen durch Hydrolyse mit vorzugsweise Mineralsäuren die freien Hydroxylgruppen darstellen. Freie OH-Gruppen lassen sich, sofern gewünscht, mit Basen in Salze überführen, z.B. in Metallsalze, Ammoniumsalze, Alkylammoniumsalze, Dialkylammoniumsalze oder dergleichen.

Verbindungen der Formel I lassen sich nach weiteren Methode einfach und in hoher Ausbeute herstellen, indem man die aktivierte Schiff'sche Base, erhalten aus a) wahlweise Aminomethyl-Phosphonat oder -Phosphinat und b) einem Aldehyd wie Benzaldehyd bzw. Keton wie Phenylaceton oder Benzophenon, mit einem entsprechend substituierten Benzylhalogenid aralkyliert [R. W. Ratcliffe and B. G. Christensen, Tetrahedron Letters, 4645 (1973)]:

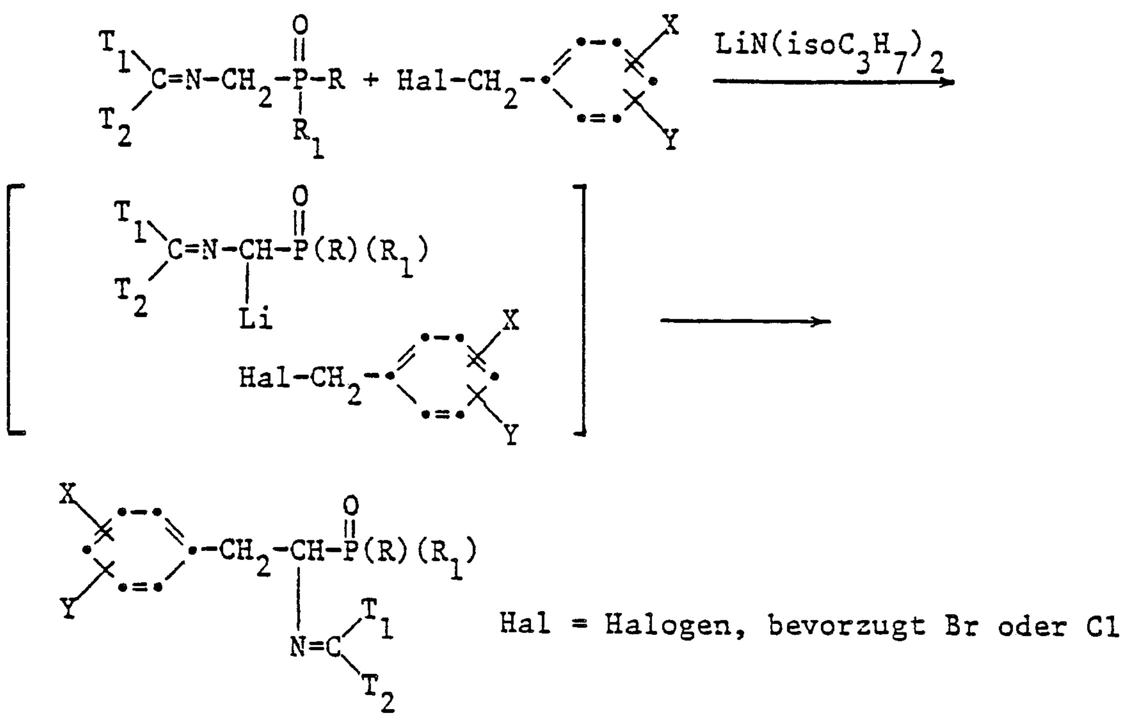


Hal = Halogen, bevorzugt Br oder Cl

Die Aktivierung der zum P-Atom nachbarständigen $CH_2$-Gruppe im Ausgangsmaterial kann auch durch andere Reagenzien wie Butyl-Lithium oder Na-Hydrid in z.B. Tetrahydrofuran erfolgen. R, $R_1$, X und Y haben die für Formel I gegebene Bedeutung, während $T_1$ H oder einen aliphatischen oder aromatischen Rest und $T_2$ einen aliphatischen oder aromatischen Rest bedeuten.

Die letzte Stufe der hydrogenolytischen Spaltung der Schiff-Base zur Erzielung des gewünschten Endprodukts der Formel I erfolgt durch katalytische Spaltung mit z.B. $H_2$/Pd/C, kann aber auch durch Wasserstoff in Gegenwart anderer Katalysatoren (wie Platin oder Pt/C) erzielt werden. In Gegenwart von Mineralsäuren wie Chlorwasserstoffsäure oder Bromwasserstoffsäure, lässt sich die Spaltung der Schiff-Base und die Hydrolyse einer Alkoxygruppe zur HO-Gruppe bei erhöhter Temperatur (40°—150°C) in einem Reaktionsschritt durchführen.

Bei allen vorangegangenen Verfahren ist die Verwendung reaktionsinerter Lösungs- oder Verdünnungsmittel vorteilhaft. Uebliche Lösungs- und Verdünnungsmittel sind beispielsweise aliphatische und aromatische Kohlenwasserstoffe wie Benzol, Toluol, Xylole, Petrolether; halogenierte Kohlenwasserstoffe wie Chlorbenzole, Methylenchlorid, Ethylenchlorid, Chloroform, Tetrachlorethylen; Ether und etherartige Verbindungen wie Dialkylether (Diethylether, Diisopropylether, tert.-Butylmethylether usw.), Anisol, Dioxan, Tetrahydrofuran; Nitrile wie Acetonitril, Propionitril und Gemische solcher Lösungsmittel unter- einander.

Die Reaktionstemperaturen bei der Aralkylierung (Benzylierung)liegen im allgemeinen zwischen −100°C und +10°C, bevorzugt bei −80°C bis −20°C. Die hydrogenolytische Spaltung wird zweckmässig im Temperaturbereich von −20°C bis +80°C durchgeführt.

Die genannten Ausgangsverbindungen sind bekannt oder werden nach an sich bekannten Methoden hergestellt. Zur Herstellung der Schiff'schen Basen wird zweckmässig unter Schutzgas wie Stickstoff oder Argon gearbeitet. Substituierte Benzylbromide lassen sich aus entsprechend substituierten Toluolen durch Bromierung mit N-Bromsuccinimid in $CCl_4$ in Gegenwart von Azoisobutyronitril (Katalysator) leicht gewinnen.

Die Verbindungen der Formel I stellen Phosphonyl- und Phosphinyl Analoge zum β-Phenylalanin dar. Als solche besitzen sie ebenfalls nachbarständig zum P-Atom ein asymmetrisches Kohlenstoffatom, wobei die den natürlichen L-α-Aminosäuren entsprechenden Strukturen (R)-Konfiguration haben, während die den D-α-Aminosäuren entsprechenden Strukturen de Formel I (S)-Konfiguration besitzen. Die jeweiligen (R)- oder (S)-Konfigurationen einer diastereomeren (R,S)-Verbindung lassen sich aus dieser durch fraktionierte Kristallisation oder Chromatographie (HPLC) rein erhalten. Die (R)-Diastereomeren und (S)-Diastereomeren zeigen unterschiedliche mikrobizide Wirkung.

Die vorliegende Erfindung betrifft auch die genannten Herstellungsverfahren, soweit sie zu neuen Verbindungen führen. Desgleichen betrifft die Erfindung auch die neuen Verbindungen der Formel I, in der mindestens einer der Substituenten X oder Y eine von Wasserstoff verschiedene Bedeutung hat, sofern R und $R_1$ gleichzeitig Hydroxy sind.

Unter diesen sind solche bevorzugt, worin

$R = R_1 = OH$,

X Wasserstoff, Fluor, Chloro oder Brom, $C_1$—$C_4$Alkyl, $CH_3O$, $Si(CH_3)_3$ —CN, —$COOCH_3$ oder —$CH_2$—$CH(NH_2)$—$P(O)(OH)_2$ und

Y Fluor, Chlor, Brom, Halogenmethoxy oder Halogenmethyl bedeuten.

Besonders bevorzugt sind unter den letztgennanten solche Verbindungen, worin mindestens einer der beiden Substituenten X und Y Halogen bedeutet oder Halogen enthält, und unter diesen solche, worin einer der beiden Substituenten X und Y Fluor bedeutet oder Fluor enthält.

In der US—PS 4,016,148 werden Peptidylamino-methanphosphonsäure-Derivate und -ethanphosphonsäure-Derivate als Potentiatoren für Antibiotika vorgeschlagen. Hinweise zur Schädlingsbekämpfung werden nicht aufeführt oder in irgendeiner Form nahegelegt.

In der US—PS 4,431,438 werden Peptidylamino-alkanphosphonsäure-Derivate als Herbizide und Verzögerer beim Pflanzenwuchs und Pflanzenauflauf vorgeschlagen. Hinweise zum Schutz von Pflanzen gegen Mikrobenbefall werden nicht gegeben. Weiterhin ist zu bemerken, dass Präparate mit allgemeinen herbiziden oder wachstumshemmenden Eigenschaften zwangsläufig für den Schutz von Kulturpflanzen sehr schlecht geeignet sind.

Im Rahmen von Untersuchungen zur Gewinnung phosphorhaltiger Substanzen mit verminteten aminosäureähnlichen Eigenschaften wird im Agr. Biol. Chem. *37* (5), 1193 [1973] 1-Amino-2-phenylethanphosphonsäure genannt. Hinweise auf mikrobizide Wirkung werden nicht gegeben.

Es wurde nun überraschend gefunden, dass die Amino-ethanphosphonsäure-Derivate der hierin genannten Formel I und ihre Salze nicht nur keine herbiziden Eigenschaften besitzen, sondern unerwarteterweise starke mikrobizide Wirkung entfalten, die insbesondere geeignet ist, Pflanzen vor Pilz- und Bakterienbefall dauerhaft zu schützen und ihre Entwicklung zu fördern.

Zu den bevorzugten Verbindungen gehören die Salze der Formel I. Besonders bevorzugt aufgrund ihrer fungiziden Wirkung sind die Metallsalze, insbesondere die Aluminium-, Nickel-, Mangan- und Kupfersalze und die Niederalkylammoniumsalze der Formel I, die sich besonders zur Erdbodenapplikation und als Beizmittel eignen.

Das Haupteinsatzgebiet von Verbindungen der Formel I liegt in der Bekämpfung von schädlichen phytopathogenen Pilzen. So besitzen die Verbindungen der Formel I eine für praktische Bedürfnisse sehr

günstige kurative, präventive und systemische Wirkung zum Schutz von Kulturpflanzen, ohne diese durch unerwünschte Nebenwirkungen zu beeinflussen. Kulturpflanzen seien im Rahmen vorliegender Erfindung beispielsweise Getreide (Weizen, Gerste, Roggen, Hafer, Reis); Rüben (Zucker- und Futterrüben); Kern-, Stein- und Beerenobst (Aepfel, Birnen, Pflaumen, Pfirsiche, Mandeln, Kirschen, Erd-, Him- und Brombeeren); Hülsenfrüchte (Bohnen, Linsen, Erbsen, Soja; Oelkulturen (Raps, Senf, Mohn, Oliven, Sonnenblumen, Kokos, Rizinus, Kakao, Erdnüsse); Gurkengewächse (Kürbis, Gurken, Melonen); Fasergewächse (Baumwolle, Flachs, Hanf, Jute); Citrusfrüchte (Orangen, Zitronen, Pampelmusen, Mandarinen); Gemüsesorten (Spinat, Kopfsalat, Spargel, Kohlarten, Möhren, Zwiebeln, Tomaten, Kartoffeln, Paprika) oder Pflanzen wie Mais, Tabak, Nüsse, Kaffee, Zuckerrohr, Tee, Weinreben, Hopfen, Bananen, Avocados und Naturkautschukgewächse sowie Zierpflanzen.

Mit den Wirkstoffen der Formel I können an Pflanzen oder an Pflanzenteilen (Früchte, Blüten, Laubwerk, Stengel, Knollen, Wurzeln) dieser und verwandter Nutzkulturen die auftretenden Mikroorganismen einge- dämmt oder vernichtet werden, wobei auch später zuwachsende Pflanzenteile von derartigen Mikroorganismen verschont bleiben. Die Wirkstoffe sind vor allem gegen die den folgenden Klassen angehörenden phytopathogenen Pilze wirksam: Ascomycetes (wie Helminthosporium- und Fusarium-Arten), Basidiomycetes (wie Tilletia und Ustilago). Die Verbindungen der Formel I können deshalb besonders als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden.

Die Erfindung betrifft somit ferner die Verwendung der Verbindungen der Formel I zur Bekämpfung phytopathogener Mikroorganismen bzw. zur präventiven Verhütung eines Befalls.

Wirkstoffe der Formel I werden üblicherweise in Form von Zusammensetzungen verwendet und können gleichzeitig oder nacheinander mit weiteren Wirkstoffen auf die zu behandelnde Fläche oder Pflanze gegeben werden. Diese weiteren Wirkstoffe können sowohl Düngemittel, Spurenelement-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegenbenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Die Verbindungen der Formel I werden dabei in unveränderter Form oder vorzugsweise zusammen mit den in der Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durh Verkapselungen in z.B. polymeren Stoffen in bekannter Weise verarbeitet. Die Anwendungsverfahren werden gleich wie die Art der Mittel den angestrebten Zielen und den gegebenen Verhältnissen entsprechend gewählt. Im Agrarsektor liegen günstige Aufwandmengen im allgemeinen bei 50 g bis 5 kg Aktivsubstanz (AS) je ha; bevorzugt 100 g bis 2 kg AS/ha, insbesondere bei 100 g bis 600 g AS/ha.

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctyphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Besonders vorteilhafte, applikationsfördernde Zuschlagstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidylethanolamin, Phosphatidylserin, Phosphatidylglycerin oder Lysolecithin.

Als oberflächenaktive Verbindungen kommen je nach Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen beschrieben: "McCutcheon's Detergents and Emulsifiers Annual" BC Publishing Corp., Ringwood New Jersey, 1981; Helmut Stache "Tensid-Taschenbuch" Carl Hanser-Verlag München/Wien 1981. M. and J. Ash. "Encyclopedia of Surfactants", Vol. I—III, Chemical Publishing Co., New York, 1980—1981.

Die agrochemischen Zubereitungen enthalten in der Regel 0,1 bis 99%, insbesondere 0,1 bis 95% Wirkstoff der Formel I, 99,9 bis 1%, insbesondere 99,8 bis 5% eines festen oder flüssigen Zusatzstoffes, und 0 bis 25%, insbesondere 0,1 bis 25% eines Tensides.

Während als Handelsware eher konzentrierte Mittel bevorzugt werden, verwendet der Endverbraucher in der Regel verdünnte Mittel.

## Herstellungsbeispiele

H—1. Herstellung von 1-Amino-2-(4-fluorphenyl)ethan-phosphonsäure der Formel

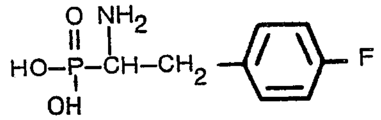

[Verb. Nr. 2.6]

a) Herstellung des Zwischenprodukts O,O-Diisopropyl-1-N-benzylidenamino-2-(4-fluorphenyl)-ethylphosphonat

Zu einer Lösung von 113,4 g (0,8 Mol) Diisopropylamin in 750 ml Tetrahydrofuran (THF) werden unter Rühren und Kühlen 500 ml n-Butyl-Lithium gegeben. Das Gemisch wird auf −75°C abgehühlt. Im Verlaufe von 1 Std. wird eine Lösung von 226,6 g (0,8 Mol) von O,O-Diisopropylbenzylidenamino-methanphosphonat in 600 ml THF zugetropft. Nach 1 Std. Rühren wird eine Lösung von 151,2 g (0,8 Mol) 4-Fluorbenzylbromid in 150 ml THF zugetropft und eine weitere Stunde gerührt. Nach dem Stehen über Nacht bei Raumtemperatur wird das Lösungsmittel abgezogen und der Rückstand in 1 Liter Dichlormethan gelöst. Die Lösung wird dreimal mit je 200 ml Wasser gewaschen und über $Na_2SO_4$ getrocknet. Nach dem Verdampfen des Lösungsmittels erhält man 286,3 g (91,4% d.Th.) des Zwischenprodukts, das nach Molekular-Destillation 261,2 g (83,4% d.Th.) reines Produkt gibt; Sdp. 160°C/0.1 mbar.

b) Hydrierung des Zwischenprodukts

Zu einer Lösung von 19,6 g (0,05 Mol) des gemäss 1a) erhaltenen Zwischenproduktes in 200 ml Isopropanol werden 2 g Pd/C (5% Pd) gegeben und das Gemisch bei Raumtemperatur (20—25°C) hydriert. Nachdem 62% Wasserstoff aufgenommen sind, werden weitere 2 g Pd/C zugefügt und nach 90% $H_2$-Aufnahme nochmals 2 g Pd/C. Nach insgesamt 19 Std. ist die $H_2$-Aufnahme beendet. Das Reaktionsgemisch wird filtriert und das Filtrat am Rotationsverdampfer eingeengt. Der verbleibende Rückstand von ca. 15 g wird am Kugelrohr destilliert. Man erhält 12,6 g (= 83,1% d.Th.) reines O,O-Diisopropyl-1-amino-2-(4-fluorphenyl)ethylphosphonat als farbloses Oel; Sdp. 170°C/0,08 mbar.

c) Herstellung des Endprodukts 1-Amino-2-(4-fluorphenyl)ethan-phosphonsäure

Eine Mischung von 227,5 g (0,75 Mol) O,O-Diisopropyl-1-amino-2-(4-fluorphenyl)ethylphosphonat und 750 ml 20%ig. Chlorowasserstoffsäure wird unter Rühren 5 Std. am Rückfluss erhitzt und weitere 10 Std. bei Raumtemperatur gerührt. Nach der Zugabe von von 500 ml Wasser wird der Rückstand filtriert und mit 250 ml Wasser und 500 ml Methanol gewaschen. Man erhält 103,3 g der Titelverbindung. Das Filtrat wird eingeengt und der Rückstand wird aus Methanol/Propylenoxid umkristallisiert, wobei weitere 43,3 g Endprodukt anfallen, zusammen 146,6 g (= 89,2% d. Th.), Smp. 266—270°C (Zers.).

H—2. Herstellung der optischen Isomeren von 1-Amino-2-(4-fluorphenyl)ethan-phosphonsäure

A. Herstellung der Dibenzoyltartrate von O,O-Diethyl-1-amino-2-(4-fluorphenyl)-ethylphosphonat

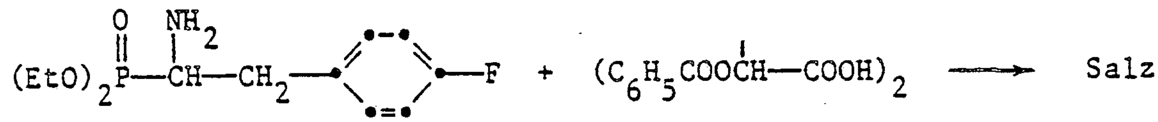


a) Zu einer Lösung von 68,82 g (0.125 Mol) O,O-Diethyl-1-amino-2-(4-fluorphenyl)-ethylphosphonat in 750 ml Methanol und 750 ml Ethanol gibt man bei Raumtemperatur 47,04 g Dibenzoylweinsäure(L)(−)x$H_2O$. Nach 2 Std. Rühren wird die entstandene dicke weisse Suspension abfiltriert und der Rückstand getrocknet. Nach zweimaliger Umkristallisation aus Ethanol erhält man 31,5 g (= 39,8% d.Th.) "Salz I", Smp. 179°C (Zers.), $[\alpha]_D^{20} = -66.4° \pm 0.5°$ (c = 2.077% in Methanol).

b) Die verbleibenden Filtrate werden zusammen eingedampf, mit 200 ml 1N NaOH gerührt, mit Kochsalz gesättigt und dreimal mit je 400 ml $CH_2Cl_2$ extrahiert. Die organische Phase wird über $Na_2SO_4$ getrocknet und eingedampft. Das erhaltene braune Oel (37,5 g) wird in 400 ml Methanol und 400 ml Ethanol gelöst und mit 25,6 g Dibenzoylweinsäure (D)(+)x$H_2O$ versetzt. Nach 2 Std. Rühren filtriert man 63 g Salz ab, das aus 1200 ml Methanol umkristallisiert wird: 7,2 g unreines "Salz II". Das Filtrat wird eingeengt und der Rückstand aus 500 ml Ethanol umkristallisiert. Man erhält 17 g reines "Salz II", $[\alpha]_D^{20} = +67.3° \pm 0.5°$ (c = 1,998% in Methanol).

B. a) Gewinnung des (+) O,O-Diethyl-1-amino-2-(4-fluorphenyl)ethylphosphonats

25,34 g Salz I werden zur Freisetzung aus dem Tartrat bei Raumtemperatur 2 Std. mit 100 ml 1N NaOH gerührt. Die klar gewordene Lösung wird mit Kochsalz gesättigt, mit 200 ml $CH_2Cl_2$ versetzt und als Suspension im Vakuum filtriert. Der Rückstand wird zweimal mit 200 ml $CH_2Cl_2$ gewaschen. Die organische Phase der vereinigten Filtrate wird abgetrennt, mit $NaSO_4$ getrocknet, filtriert und eingedampf: 9,1 g (82,7% d.Th.) des gewünschten Endprodukts als blassgelbes Oel, $[\alpha]_D^{20} = +10.6° \pm 0.4°$ (c = 2,5% in Methanol);

$^1$H—NMR in $CDCl_3$: 1.3 ($NH_2$, $CH_3$) (t, 8H); 2.3—3.5 (PCH—$CH_2$) (m, 3H); 4.17 ($OCH_2$) (qu, 4H); 7.1 (m) 4H, Phenyl).

b) Gewinnung der (+) 1-Amino-2-(4-fluorphenyl)-ethanphosphonsäure

5,51 g (0.02 Mol) des unter a) erhaltenen (+) Phosphonats werden in 40 ml 20%ig. Chlorwasserstoffsäure während 4 Std. zum Rückfluss erhitzt. Die Lösung wird dann eingedampft, und der Rückstand aus Methanol/Propylenoxid umkristallisiert. Man erhält 3,7 g (= 84,5% d.Th.) des gewünschten Endprodukts, Smp. 259—263°C (Zers.); $[\alpha]_D^{20}$ = +37.5° ± 0.4° (c = 2.636 in 1N NaOH).

$^1H$—NMR in $D_2O$/NaOD: 2.3—3.1 (PCH—$CH_2$) (m, 3H): 4.65 (OH, $NH_2$) (S); 6.6—7.1 (Phenyl, 4H) (m).

C. a) Die Gewinnung des (−)O,O-Diethyl-1-amino-2-(4-fluorphenyl)ethylphosphonats erfolgt analog der Methode

Ba) aus dem "Salz II" mit 1N NaOH-Lösung:

Ausbeute 95.9% der Theorie. Blassgelbes Oel $[\alpha]_D^{20}$ = +10.3 ± 0.5° (c = 2.036% in Methanol).

b) Die Gewinnung der (−)1-Amino-2-(4-fluorphenyl)-ethanphosphonsäure erfolgt analog der Methode

Bb) durch Hydrolyse des vorstehend beschriebenen (−)Phosphonats in 20%ig. Chlorwasserstoffsäure. Ausbeute 77.6% der Theorie.

Smp. 261—263°C (Zers.); $[\alpha]_D^{20}$ = −36.9° ± 0.5° (c = 2.081% in 1N NaOH).

$^1H$—NMR in $D_2O$/NaOD: 2.5—3.4 (PCH—$CH_2$) (m, 3H); 4.85 (OH, $NH_2$) (s); 6.8—7.4 (Phenyl, 4H) (m).

Auf diese Art oder nach Art einer der weiter oben angegebenen Verfahren lassen sich auch die nachfolgend aufgeführten Verbindungen der Formel I herstellen, die, sofern nicht speziell erwähnt, als Diastereomerengemische anfallen.

Die $^1H$—NMR-Werte wurden mit einem Varian EM—360 Spektrometer bei 60 MHz in $CDCl_3$ mit $(CH_3)_4Si$ als Referenzsubstanz ermittelt.

Die $^{31}P$—NMR-Werte wurden mit einem Bruker WP 80 Spektrometer beir 32,28 MHz mit 85%ig. $H_3PO_4$ (extern) als Referenzsubstanz aufgenommen.

Es bedeuten:

Me = Methyl

Et = Ethyl

iPr = Isopropyl

Temperaturen sind in Celsiusgraden angegeben.

Tabelle 1:

Zwischenprodukte der Formel 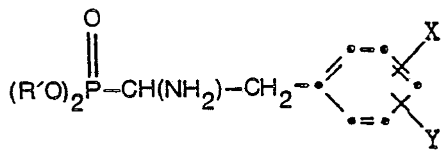

| Verb. Nr. | R' | X | Y | Physikal. Konstante |
|---|---|---|---|---|
| 1.1 | Et | H | H | Sdp. 170°/0.6 mbar |
| 1.2 | iPr | H | H | $^{1}$H:1.3($NH_2$), 2,5-3.5($PCH-CH_2$) 7.3 (Aromat-H) |
| 1.3 | Et | 4-Cl | H | $n_D^{20}$ 1.5140 |
| 1.4 | Et | 3-Cl | H | $^{1}$H:1.3; 2.4-3,5; 7.2 |
| 1.5 | Et | 4-Br | H | Sdp. 125°/0.05 mbar |
| 1.6 | Et | 4-J | H | $^{1}$H: 1.3; 2.3-3.4; 7.767 |
| 1.7 | Et | 4-F | H | Sdp. 150-160°/0.08 mbar |
| 1.8 | iPr | 4-F | H | Sdp. 170°/0.08 mbar |
| 1.9 | iPr | 3-F | H | Sdp. 150°/0.05 mbar |
| 1.10 | iPr | 2-F | H | Sdp. 150°/0.08 mbar |
| 1.11 | Et | 2-Cl | 4-Cl | Fp. 59-62° |
| 1.12 | Et | 3-Cl | 4-Cl | $n_D^{20}$ 1.5272 |
| 1.13 | Et | 4-Me | H | $^{1}$H: 1.4; 2.5-3.5; 7.15; 2.32 (X=$CH_3$). $^{31}$P: 28.09 |
| 1.14 | Et | 3-Me | H | $n_D^{20}$ 1.5060 |
| 1.15 | Et | 2-Me | H | $^{1}$H: 1.33; 2.5-3.5; 7.2; 2.33 (X=$CH_3$). $^{31}$P: 28.19 |
| 1.16 | Et | H | 3-$CF_3$ | $n_D^{20}$ 1.4659 |
| 1.17 | iPr | 4-t.Butyl | H | Sdp. 140°/0.01 mbar |
| 1.18 | Et | 4-MeO | H | Sdp. 165°/0.2 mbar |
| 1.19 | Et | 2-MeO | H | Sdp. 125°/0.1 mbar |
| 1.20 | Et | 2-F | 6-Cl | |
| 1.21 | Et | H | 4-$OCHF_2$ | |
| 1.22 | Et | H | 3-$OCHF_2$ | |
| 1.23 | iPr | H | 4-$OCHF_2$ | |

Tabelle 1: (Fortsetzung)

Zwischenprodukte der Formel 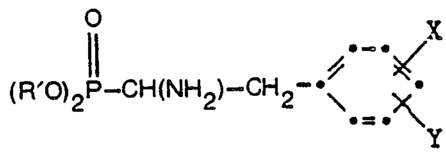

| Verb. Nr. | R' | X | Y | Physikal. Konstante |
|---|---|---|---|---|
| 1.24 | iPr | H | 4-$CF_3$ | |
| 1.25 | iPr | H | 4-$CHF_2$ | |
| 1.26 | Et | H | 4-$OC_2F_5$ | |
| 1.27 | Et | H | 4-$OCF_2$-$CF_2Cl$ | |
| 1.28 | Et | 2-$Si(Me)_3$ | H | Sdp. 110°/0.1 mbar |
| 1.29 | Et | 3-$Si(Me)_3$ | H | Sdp. 150°/0.12 mbar |
| 1.30 | Et | 4-$Si(Me)_3$ | H | Sdp. 120°/0.1 mbar |
| 1.31 | iPr | 4-CN | H | $^1H$: 1.35; 2.6-3,5; 7.4-7.6 |
| 1.32 | Et | 3-F | 4-F | Sdp. 115°/0.1 mbar |
| 1.33 | Et | 2-F | 4-F | Sdp. 110°/0.08 mbar |
| 1.34 | iPr | 2-Cl | 3-Cl | Sdp. 160°/0.1 mbar |
| 1.35 | iPr | 3-J | H | |
| 1.36 | iPr | 4-$COOCH_3$ | H | Sdp. 160°/0.08 mbar |
| 1.37 | Et | 4-$CH_2$-$CH(NH_2)$-$P(O)(OEt)_2$ | H | |
| 1.38 | Et | 2-Cl | 4-F | |
| 1.39 | Et | 2-F | 6-F | Sdp. 105°/0.1 mbar |
| 1.40 | Et | 2-F | H | Sdp. 95°/0.1 mbar |

Tabelle 2:

Verbindungen der Formel 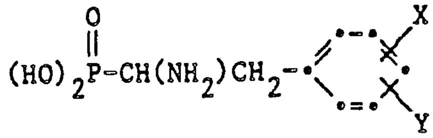

| Verb. Nr. | X | Y | Schmelzpunkt (Smp.) °C [Zers.] |
|---|---|---|---|
| 2.2 | 4-Cl | H | 280-282 |
| 2.3 | 3-Cl | H | 268-272 |
| 2.4 | 4-Br | H | 284-286 |
| 2.5 | 4-J | H | 255-259 |
| 2.6 | 4-F | H | 266-270 |
| 2.7 | 3-F | H | 278-280 |
| 2.8 | 2-F | H | 275-276 |
| 2.9 | 2-Cl | 4-Cl | 279-280 |
| 2.10 | 3-Cl | 4-Cl | 274-278 |
| 2.11 | 4-Me | H | 276-279 |
| 2.12 | 3-Me | H | 270-273 |
| 2.13 | 2-Me | H | 244-245 |
| 2.14 | H | $3-CF_3$ | 258-262 |
| 2.15 | 4-t.Butyl | H | 264-268 |
| 2.16 | 4-OMe | H | |
| 2.17 | 2-OMe | H | |
| 2.18 | 2-F | 6-Cl | |
| 2.19 | H | $4-OCHF_2$ | 232-236 |
| 2.20 | H | $3-OCHF_2$ | |
| 2.21 | H | $4-CF_3$ | |
| 2.22 | H | $4-CHF_2$ | |
| 2.23 | H | $4-OC_2F_5$ | |
| 2.24 | H | $4-OCF_2-CF_2Cl$ | |

Tabelle 2: (Fortsetzung)

Verbindungen der Formel 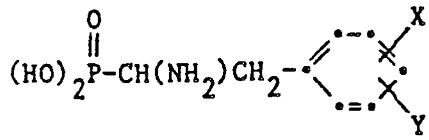

| Verb. Nr. | X | Y | Schmelzpunkt (Smp.) °C [Zers.] |
|---|---|---|---|
| 2.25 | 2-Si(Me)$_3$ | H | |
| 2.26 | 3-Si(Me)$_3$ | H | |
| 2.27 | 4-Si(Me)$_3$ | H | |
| 2.28 | 4-CN | H | |
| 2.29 | 3-F | 4-F | 267 - 269 |
| 2.30 | 2-F | 4-F | 271 - 274 |
| 2.31 | 2-Cl | 3-Cl | |
| 2.32 | 3-J | H | |
| 2.33 | 4-$CH_2$-CH($NH_2$)-P(O)$(OH)_2$ | H | |
| 2.34 | 2-Cl | 4-F | |
| 2.35 | 3-Me | 4-Cl | |
| 2.36 | 2-Me | 4-F | |
| 2.37 | 2-F | 6-F | 258 - 261 |

Tabelle 3:

Verbindungen der Formel 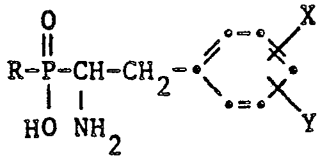

| Verb. Nr. | R | X | Y | Smp.°C [Zers.] |
|---|---|---|---|---|
| 3.1 | Me | H | H | 261-262 |
| 3.2 | Et | 2-Me | H | 234-235 |
| 3.3 | Et | 3-Me | H | 229-232 |
| 3.4 | Et | 4-Me | H | 233-236 |
| 3.5 | Me | 4-F | H | 254-257 |
| 3.6 | Me | 4-Br | H | 254-257 |
| 3.7 | Me | 4-Cl | H | 242-245 |
| 3.8 | Me | 3-Me | H | 260-262 |
| 3.9 | Et | H | H | 230-231 |
| 3.10 | Me | 3-Cl | H | |
| 3.11 | Me | 3-F | H | |
| 3.12 | Me | 2-F | H | |
| 3.13 | Et | 2-F | 6-Cl | |
| 3.14 | Me | 2-Cl | 4-Cl | |
| 3.15 | Me | 3-Cl | 4-Cl | |
| 3.16 | Et | 2-Cl | 3-Cl | |
| 3.17 | Me | H | 3-$CF_3$ | |
| 3.18 | Me | H | 4-$OCHF_2$ | |
| 3.19 | Me | 4-$OC_2H_5$ | H | |
| 3.20 | Me | 4-t.Butyl | H | |
| 3.21 | Me | H | 4-$OC_2F_5$ | |
| 3.22 | Et | 2-Cl | 4-F | |

Tabelle 5:

Verbindungen der Formel 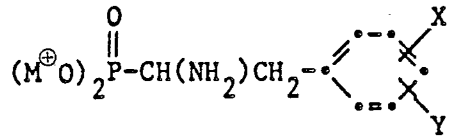

| Verb. Nr. | $M^{\oplus}$ | X | Y | Physikalische Konstante |
|---|---|---|---|---|
| 5.1 | $Na^{+}$ | H | H | Smp.>280°(Zers.) |
| 5.2 | 1/2 $Mg^{++}$ | H | H | |
| 5.3 | 1/3 $Al^{+++}$ | H | H | |
| 5.4 | 1/2 $Mn^{++}$ | 4-F | H | |
| 5.5 | 1/2 $Ni^{++}$ | 4-F | H | |
| 5.6 | 1/3 $Al^{+++}$ | 4-F | H | |
| 5.7 | 1/2 $Zn^{++}$ | 4-F | H | |
| 5.8 | 1/4 $Zr^{4+}$ | 4-Cl | H | |
| 5.9 | 1/2 $Mn^{++}$ | 4-Cl | H | |
| 5.10 | 1/2 $Co^{++}$ | 4-Cl | H | |
| 5.11 | 1/3 $Al^{+++}$ | 2-Cl | 4-F | |
| 5.12 | 1/2 $Cu^{++}$ | 2-Cl | 4-F | |
| 5.13 | 1/2 $Cu^{++}$ | 4-F | H | Smp.>300°(Zers.) |
| 5.14 | 1/3 $Fe^{+++}$ | 4-F | H | |
| 5.15 | 1/2 $Ca^{++}$ | H | $4-OCHF_2$ | |
| 5.16 | 1/3 $Al^{+++}$ | H | $4-OCHF_2$ | |
| 5.17 | 1/2 $Cu^{++}$ | 4-CN | H | |
| 5.18 | 1/3 $Al^{+++}$ | 2-Cl | 6-F | |
| 5.19 | 1/2 $Mn^{++}$ | 2-Cl | 6-F | |
| 5.20 | 1/2 $Ca^{++}$ | 2-Me | 4-F | |
| 5.21 | $(MeNH_3)^{+}$ | 4-F | H | Smp.275-285° (Zers.) |
| 5.22 | $(isoC_3H_7NH_3)^{+}$ | H | $CF_3$ | |
| 5.23 | $(C_6H_5NH_3)^{+}$ | 2-Cl | 4-F | |

Formulierungsbeispiele für Wirkstoffe der Formel I (% = Gewichtsprozent)

| Fl. Lösungen | a) | b) | c) | d) |
|---|---|---|---|---|
| Wirkstoff aus den Tabellen | 80% | 10% | 5% | 95% |
| Ethylenglykol-monomethyl-ether | 20% | — | — | — |
| Polyethylenglykol MG 400 | — | 70% | — | — |
| N-Methyl-2-pyrrolidon | — | 20% | — | — |
| Epoxydiertes Kokosnussöl | — | — | 1% | 5% |
| Benzin (Siedegrenzen 160—190°C) | — | — | 94% | — |

(MG = Molekulargewicht)

Die Lösungen sind zur Anwendung in Form kleinster Tropfen geeignet.

| F2. Granulate | a) | b) |
|---|---|---|
| Wirkstoff aus den Tabellen | 5% | 10% |
| Kaolin | 94% | — |
| Hochdisperse Kieselsöure | 1% | — |
| Attapulgit | — | 90% |

Der Wirkstoff wird in Methylenchlorid gelöst, auf den Träger aufgesprüht und das Lösungsmittel anschliessend im Vakuum abgedampft.

| F3. Stäubemittel | a) | b) |
|---|---|---|
| Wirkstoff aus den Tabellen | 2% | 5% |
| Hochdisperse Kieselsäure | 1% | 5% |
| Talkum | 97% | — |
| Kaolin | — | 90% |

Durch inniges Vermischen der Trägerstoffe mit dem Wirkstoff erhält man gebrauchsfertige Stäubemittel.

| F4. Spritzpulver | a) | b) | c) |
|---|---|---|---|
| Wirkstoff aus den Tabellen | 25% | 50% | 75% |
| Na-Ligninsulfonat | 5% | 5% | — |
| Na-Laurylsulfat | 3% | — | 5% |
| Na-Diisobutylnaphthalinsulfonat | — | 6% | 10% |
| Octylphenolpolyethylenglykolether (7—8 Mol Ethylenoxid) | — | 2% | — |
| Hochdisperse Kieselsäure | 5% | 10% | 10% |
| Kaolin | 62% | 27% | — |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen und besonders zur Beizung von Saatgut geeignet sind.

F5. Emulsions-Konzentrat

| | |
|---|---|
| Wirkstoff aus den Tabellen | 10% |
| Octylphenolpolyethylenglykolether | 5% |
| (4—5 Mol Ethylenoxid) | |
| Ca-Dodecylbenzolsulfonat | 3% |
| Ricinusölpolyglykolether | 4% |
| (35 Mol Ethylenoxid) | |
| Cyclohexanon | 30% |
| Xylolgemisch | 50% |

Aus diesem Konzentrat können durch Verdünnen mit Wasser Emulsionen jeder gewünschten Konzentration hergestellt werden, die sich zum Beizen von Saatgut eignen.

Biologische Beispiele:

Beispiel B—1

Wirkung gegen Botrytis cinerea auf Bohnen Residual protektive Wirkung

Ca. 10 cm hohe Bohnen-Pflanzen werden mit einer aus Spritzpuler des Wirkstoffes hergestellen Spritzbrühe (0,02% Aktivsubstanz) besprüht. Nach 48 Stunden werden die behandelten Pflanzen mit einer Konidien-suspension des Pilzes infiziert. Nach einer Inkubation der infizierten Pflanzen während 3 Tagen bei 95—100% relativer Luftfeuchtigkeit und 21°C erfolgt die Beurteilung des Pilzbefalls. Der Botrytis-Befall umbehandelter aber infizierter Bohenpflanzen beträgt 100%. Der Befall nach Behandlung mit einer der Verbindungen der Formel I beträgt $< 20\%$; bei Behandlung z.B. mit den Verbindungen Nr. 1.5, 2.6, 2.11, 3.4, 2.15, 2.37, 5.13 und anderen tritt kein Befall auf (0—5%).

Beispiel B—2

Samenbeizung an Roggen gegen Fusarium nivale

Mit Fusarium nivale natürlich infizierter Roggen der Sorte Tetrahell wird auf einer Mischrolle mit dem zu prüfenden Fungizid bei Konzentrationen von 600 und 200 ppm AS (bezogen auf das Gewicht des Saatgutes) gebeizt. Der infizierte und behandelte Roggen wird im Oktober im Freiland mit einer Sämaschine auf Parzellen von 3 m Länge und 6 Saatreihen ausgesät. Pro Versuchsprodukt und Konzentration laufen 3 Wiederholüngen. Bis zur Befallsauswertung wird die Versuchspflanzung unter normalen Feldbedingungen kultiviert, vorzugsweise in einer Region mit geschlossener Schneedecke während der Wintermonate. Zur Beurteilung und Phytotoxizität werden im Herbst der Saatauflauf und im Frühling die Bestandesdichte und Bestockung bonitiert. Zur Ermittlung der Wirkstoffaktivität wird im Frühjahr, unmittelbar nach der Schneeschmelze, der prozentuale Anteil Fusarium-befallener Pflanzen ausgezählt.

Die geprüften Substanzen der Formel I zeigen kaum oder keine Phytotoxizität. Mit den Verbindungen Nr. 1.5, 1.8, 2.1, 2.2, 2.6, 2.8, 2.34 und anderen wird der Fusariumbefall bei beiden Wirkstoffkonzentrationen vollständig verhindert.

Beispiel B—3

Samenbeizung an Gerste gegen Helminthosporium gramineum

Mit Helminthosporium gramineum auf natürliche Weise infizierte Wintergerste der Sorte "C1" wird auf einer Mischrolle mit dem zu prüfenden Fungizid bei Konzentrationen von 600 und 200 ppm AS (bezogen auf das Gewicht des Saatgutes) gebeizt. Die infizierte und behandelte Gerste wird im Oktober im Freiland mit einer Sämaschine auf Parzellen von 2 m Länge und 3 Saatreihen ausgesät. Pro Versuchsprodukt und Konzentration laufen 3 Wiederholungen. Bis zur Befallsauswertung wird die Versuchspflanzung unter normalen Feldbedingungen kultiviert. Zur Beurteilung der Phytotoxizität wird im Herbst der Saatauflauf und im Frühling die Bestandesdichte und Bestockung bonitiert. Zur Ermittlung der Wirkstoffaktivität werden zum Zeitpunkt des Aehrenschiebens der prozentuale Anteil der durch Helminthosporium befallenen Halme ausgezählt.

Die geprüften Substanzen der Formel I zeigen kaum oder keine Phytotoxizität. Mit den Verbindungen Nr. 1.28, 2.2, 2.6, 2.9, 2.30, 3.5 und anderen wird der Pilzbefall bei beiden Konzentrationen auf weniger als 20% im Vergleich zu ungebeizten Kontrollpflanzen reduziert.

Beispiel B—4

Samenbeizung an Gerste gegen Ustilago nuda

Mit Ustilago nuda auf natürliche Weise infizierte Wintergerste der Sorte "RM1" wird auf einer Mischrolle mit dem zu prüfenden Fungizid bei Konzentrationen von 600 und 200 ppm AS (bezogen auf das Gewicht des Saatgutes) gebeizt. Die infizierte und behandelte Gerste wird im Oktober im Freiland mit einer Sämaschine auf Parzellen von 2 m Länge und 3 Saatreihen ausgesät. Pro Versuchsprodukt und Konzentration werden 3 Wiederholungen durchgeführt. Bis zur Befallsauswertung wird die Versuchspflanzung unter normalen Feldbedingungen kultiviert. Zur Ermittlung der Wirkstoffaktivität wird während der Blüte der prozentuale Anteil der durch Ustilago befallenen Aehren festgestellt.

Mit den Verbindungen Nr. 2.6, 2.10, 2.15, 2.19, 5.21 und anderen wird der Pilzbefall bei beiden Konzentrationen auf weniger als 20% reduziert.

Beispiel B—5

Samenbeizung an Weizen gegen Tilletia tritici

Künstlich mit Brandsporen von Tilletia tritici infizierter Winterweizen der Sorte Probus (3 g trockenes Sporenmaterial auf 1 kg Saatgut) wird auf einer Mischrolle mit dem zu prüfenden Fungizid gebeizt, wobei Konzentrationen von 600 und 200 ppm AS (bezogen auf das Gewicht des Saatgutes) angewendet werden. Der infizierte und behandelte Weizen wird im Oktober im Freiland mit einer Sämaschine auf Parzellen von 2 m Länge und 3 Saatreihen ausgesät. Pro Versuchsprodukt und Konzentration werden 3 Wiederholungen durchgeführt. Bis zur Aehrenreife wird die Versuchspflanzung unter normalen Feldbedingungen kultiviert. Zur Beurteilung der Phytotoxizität wird im Herbst der Saatauflauf und im Frühling die Bestandesdichte und Bestockung bonitiert. Zur Ermittlung der Wirkstoffaktivität werden zum Zeitpunkt der Aehrenreife der prozentuale Anteil durch Tilletia befallener Aehren ausgezählt.

Verbindungen der Formel I, z.B. Nr. 1.5, 2.8, 1.28 zeigen bei beiden Konzentrationen eine deutliche Schutzwirkung gegen Befall von Tilletia tritici, wodurch Auflauf und Wuchs der Weizenpflanzen günstig beeinflusst werden.

**Patentansprüche für die Vertragsstaaten: BE CH DE FR GB IT LI LU NL SE**

1. Mikrobizide Mittel enthaltend als mindestens einen Wirkstoff eine Verbindung der Formel I

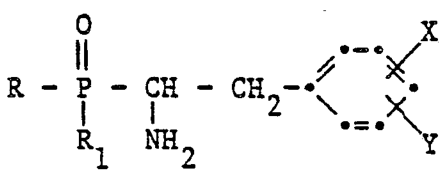

(I);

worin

R $C_1$—$C_4$-Alkyl oder OH,

$R_1$ OH,

X Wasserstoff, Halogen, $C_1$—$C_4$-Alkyl, $C_1$—$C_4$-Alkoxy, $Si(CH_3)_3$, —CN, —$COOCH_3$ oder —$CH_2$—$CH(NH_2)$—$P(O)(R)(R_1)$, und

Y Wasserstoff, Halogen, Halogenmethoxy, Halogenethoxy oder Halogenmethyl bedeuten, unter Einschluss entsprechender Salze; zusammen mit einem geeigneten Trägermaterial und/oder Netzmittel, wobei stets ein Netzmittel anwesend ist, wenn der Wirkstoff der Formel I gleichzeitig die Bedeutungen $R=R_1=OH$ und X=Y=Wasserstoff hat.

2. Mittel gemäss Anspruch 1, enthaltend eine Verbindung der Formel I, worin

$R=R_1=OH$,

X Wasserstoff, Fluor, Chlor oder Brom, $C_1$—$C_4$-Alkyl, $CH_3O$, $Si(CH_3)_3$, —CN, —$COOCH_3$ oder —$CH_2$—$CH(NH_2)$—$P(O)(OH)_2$ und

Y Fluor, Chlor, Brom, Halogenmethoxy oder Halogenmethyl bedeuten.

3. Mittel gemäss Anspruch 2, enthaltend eine Verbindung der Formel I, worin mindestens einer der beiden Substituenten X und Y Halogen bedeutet oder Halogen enthält.

4. Mittel gemäss Anspruch 3, enthaltend eine Verbindung der Formel I, worin einer der beiden Substituenten X und Y Fluor bedeutet oder Fluor enthält.

5. Mittel gemäss Anspruch 1, enthaltend als Wirkstoff 1-Amino-2-(4-tolyl)-ethanphosphonsäure.

6. Mittel gemäss Anspruch 1, enthaltend als Wirkstoff 1-Amino-2-phenyl-ethanphosphonsäure.

7. Mittel gemäss Anspruch 1, enthaltend als Wirkstoff 1-Amino-2-(4-fluorphenyl)-ethanphosphonsäure.

8. Verfahren zur Herstellung von Verbindungen der Formel I

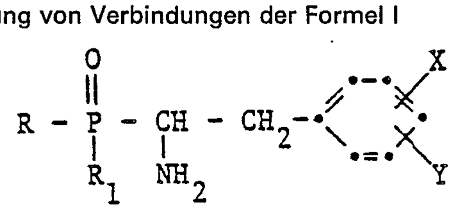

(I),

worin
R $C_1$—$C_4$-Alkyl oder OH,
$R_1$ OH,
X Wasserstoff, Halogen, $C_1$—$C_4$-Alkyl, $C_1$—$C_4$-Alkoxy, $Si(CH_3)_3$, —CN, —$COOCH_3$ oder —$CH_2$—$CH(NH_2)$—$P(O)(R)(R_1)$, und
Y Wasserstoff, Halogen, Halogenmethoxy, Halogenethoxy oder Halogenmethyl bedeuten, wobei mindestens einer der Substituenten X und Y eine von Wasserstoff verschiedene Bedeutung hat, sofern R und $R_1$ gleichzeitig Hydroxy sind, dadurch gekennzeichnet, dass man eine Schiff'sche Base der Formel

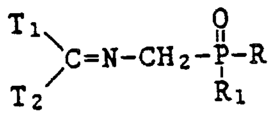

$CH_2$-aktiviert, dann mit einem entsprechend substituierten Benzylhalogenid der Formel

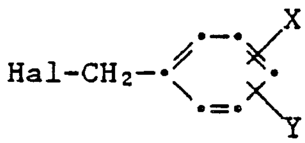

aralkyliert und das entstandene Zwischenprodukt der Formel

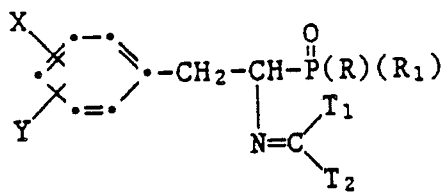

hydrogenolytisch in Gegenwart eines Katalysators spaltet, unter weiterer Behandlung mit einer Mineralsäure bei erhöhter Temperatur, sofern R und/oder $R_1$ Alkoxy bedeuten und in eine Hydroxygruppe umgewandelt werden, wobei in den vorgenannten Zwischenprodukte-Formeln R, $R_1$, X und Y die für Formel I gegebene Bedeutung haben und R und $R_1$ je auch $C_1$—$C_4$-Alkoxy bedeuten können, während $T_1$ Wasserstoff oder einen aliphatischen oder aromatischen Rest bedeutet und $T_2$ einen aliphatischen oder aromatischen Rest darstellt und Hal ein Halogenatom bedeutet.

9. Verbindungen der Formel I gemäss Anspruch 1 und ihre Salze, wobei mindestens einer der Substituenten X oder Y eine von Wasserstoff verschiedene Bedeutung hat, sofern R und $R_1$ gleichzeitig Hydroxy sind.

10. Verbindungen der Formel I gemäss Anspruch 2.

11. Verbindungen der Formel I gemäss Anspruch 3.

12. Verbindungen der Formel I gemäss Anspruch 4.

13. 1-Amino-2-(4-tolyl)-ethanphosphonsäure.

14. 1-Amino-2-(4-fluorphenyl)-ethanphosphonsäure.

15. Verfahren zur Bekämpfung oder Verhütung eines pathogenen Mikroorganismen-Befalls an Kulturpflanzen, daduch gekennzeichnet, dass man eine Verbindung der Formel I gemäss Anspruch 1 auf die Pflanze, auf Pflanzenteile oder ihren Standort appliziert.

16. Verfahren gemäss Anspruch 15, dadurch gekennzeichnet, dass die zu behandelnden Pflanzenteile das Saatgut sind.

**Patentansprüche für den Vertragsstaat: AT**

1. Mikrobizide Mittel enthaltend als mindestens einen Wirkstoff eine Verbindung der Formel I

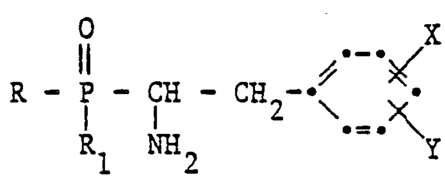

(I),

worin
R $C_1$—$C_4$-Alkyl oder OH,
$R_1$ OH,

X Wasserstoff, Halogen, $C_1$—$C_4$-Alkyl, $C_1$—$C_4$-Alkoxy, $Si(CH_3)_3$, —CN, —$COOCH_3$ oder —$CH_2$—$CH(NH_2)$—$P(O)(R)(R_1)$, und

Y Wasserstoff, Halogen, Halogenmethoxy, Halogenethoxy oder Halogenmethyl bedeuten, unter Einschluss entsprechender Salze; zusammen mit einem geeigneten Trägermaterial und/oder Netzmittel, wobei stets ein Netzmittel anwesend ist, wenn der Wirkstoff der Formel I gleichzeitig die Bedeutungen $R=R_1=OH$ und X=Y=Wasserstoff hat.

2. Mittel gemäss Anspruch 1, enthaltend eine Verbindung der Formel I, worin

$R=R_1=OH$,

X Wasserstoff, Fluor, Chlor oder Brom, $C_1$—$C_4$-Alkyl, $CH_3O$, $Si(CH_3)_3$, —CN, —$COOCH_3$ oder —$CH_2$—$CH(NH_2)$—$P(O)(OH)_2$ und

Y Fluor, Chlor, Brom, Halogenmethoxy oder Halogenmethyl bedeuten.

3. Mittel gemäss Anspruch 2, enthaltend eine Verbindung der Formel I, worin mindestens einer der beiden Substituenten X und Y Halogen bedeutet oder Halogen enthält.

4. Mittel gemäss Anspruch 3, enthaltend eine Verbindung der Formel I, worin einer der beiden Substituenten X und Y Fluor bedeutet oder Fluor enthält.

5. Mittel gemäss Anspruch 1, enthaltend als Wirkstoff 1-Amino-2-(4-tolyl)-ethanphosphonsäure.

6. Mittel gemäss Anspruch 1, enthaltend als Wirkstoff 1-Amino-2-phenyl-ethanphosphonsäure.

7. Mittel gemäss Anspruch 1, enthaltend als Wirkstoff 1-Amino-2-(4-fluorphenyl)-ethanphosphonsäure.

8. Verfahren zur Herstellung von Verbindungen der Formel I

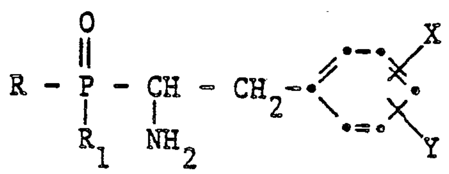 (I),

worin

R $C_1$—$C_4$-Alkyl oder OH,

$R_1$ OH,

X Wasserstoff, Halogen, $C_1$—$C_4$-Alkyl, $C_1$—$C_4$-Alkoxy, $Si(CH_3)_3$, —CN, —$COOCH_3$ oder —$CH_2$—$CH(NH_2)$—$P(O)(R)(R_1)$, und

Y Wasserstoff, Halogen, Halogenmethoxy, Halogenethoxy oder Halogenmethyl bedeuten, wobei mindestens einer der Substituenten X und Y eine von Wasserstoff verschiedene Bedeutung hat, sofern R und $R_1$ gleichzeitig Hydroxy sind, dadurch gekennzeichnet, dass man eine Schiff'sche Base der Formel

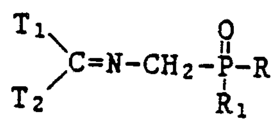

$CH_2$-aktiviert, dann mit einem entsprechend substituierten Benzylhalogenid der Formel

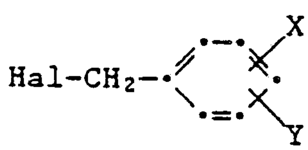

aralkyliert und das entstandene Zwischenprodukt der Formel

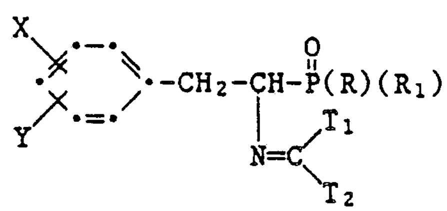

hydrogenolytisch in Gegenwart eines Katalysators spaltet, unter weiterer Behandlung mit einer Mineralsäure bei erhöhter Temperatur, sofern R und/oder $R_1$ Alkoxy bedeuten und in eine Hydroxygruppe umgewandelt werden, wobei in den vorgenannten Zwischenprodukte-Formeln R, $R_1$, X und Y die für Formel I gegebene Bedeutung haben und R und $R_1$ je auch $C_1$—$C_4$-Alkoxy bedeuten können, während $T_1$ Wasserstoff oder einen aliphatischen oder aromatischen Rest bedeutet und $T_2$ einen aliphatischen oder aromatischen Rest darstellt und Hal ein Halogenatom bedeutet.

9. Verfahren zur Bekämpfung oder Verhütung eines pathogenen Mikroorganismen-Befalls an

Kulturpflanzen, daduch gekennzeichnet, dass man eine Verbindung der Formel I gemäss Anspruch 1 auf die Pflanze, auf Pflanzenteile oder ihren Standort appliziert.

10. Verfahren gemäss Anspruch 9, dadurch gekennzeichnet, dass die zu behandelnden Pflanzenteile das Saatgut sind.

**Revendications pour les Etats contractants: BE CH DE FR GB IT LI LU NL SE**

1. Composition microbicide contenant comme au moins une substance active un composé de formule I

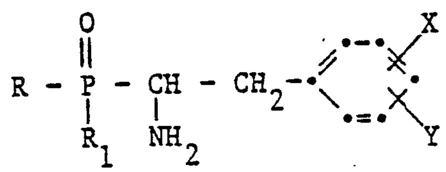

(I),

où

R représente un alkyle en $C_1$—$C_4$ ou OH,

$R_1$ OH

X l'hydrogène, un halogène, un alkyle en $C_1$—$C_4$, un alcoxy en $C_1$—$C_4$, $Si(CH_3)_3$, —CN, —$COOCH_3$ ou —$CH_2$—$CH(NH_2)$—$P(O)(R)(R_1)$ et

Y l'hydrogène, un halogène, un halogénométhoxy, un halogénoéthoxy ou un halogénométhyle, y compris les sels correspondants; associé à un support approprie et/ou un agent mouillant, un agent mouillant étant toujours présent, lorsque la substance active de formule I a en même temps les significations $R=R_1=OH$ et X=Y=hydrogène.

2. Composition selon la revendication 1, contenant un composé de formule I où

$R=R_1=OH$,

X représente l'hydrogène, le fluor, le chlore ou le brome, un alkyle en $C_1$—$C_4$, $CH_3O$, $Si(CH_3)_3$, —CN, —$COOCH_3$ ou —$CH_2$—$CH(NH_2)$—$P(O)(OH)_2$ et

Y représente le fluor, le chlore, le brome, un halogénométhoxy ou un halogénométhyle.

3. Composition selon la revendication 2, contenant un composé de formule I où au moins l'un des deux substituants X et Y représente un halogène ou contient un halogène.

4. Composition selon la revendication 3, contenant un composé de formule I où l'un des deux substituants X et Y représente le fluor ou contient le fluor.

5. Composition selon la revendication 1, contenant comme substance active l'acide 1-amino-2-(4-tolyl)-éthanephosphonique.

6. Composition selon la revendication 1, contenant comme substance active l'acide 1-amino-2-phényl-éthanephosphonique.

7. Composition selon la revendication 1, contenant comme substance active l'acide 1-amino-2-(4-fluorophényl)-éthanephosphonique.

8. Procédé de préparation des composés de formule I

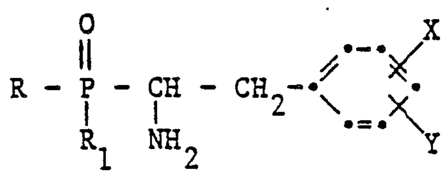

(I),

où

R représente un alkyle en $C_1$—$C_4$ ou OH,

$R_1$ OH,

X l'hydrogène, un halogène, un alkyle en $C_1$—$C_4$, un alcoxy en $C_1$—$C_4$, $Si(CH_3)_3$, —CN, —$COOCH_3$ ou —$CH_2$—$CH(NH_2)$—$P(O)(R)(R_1)$ et

Y l'hydrogène, un halogène, un halogénométhoxy, un halogénoéthoxy ou un halogénométhyle, au moins l'un des substituants X et Y ayant une signification différente de l'hydrogène, dans la mesure où R et $R_1$ sont en même temps l'hydroxy,

caractérisé en ce que l'on active $CH_2$ dans une base de Schiff de formule

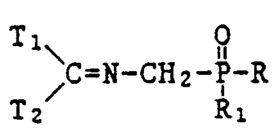

puis en ce que l'on aralkyle avec un halogénure de benzyle substitué correspondant à la formule

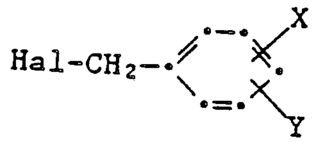

et en ce que l'on clive par hydrogénolyse le produit intermédiaire formé de formule

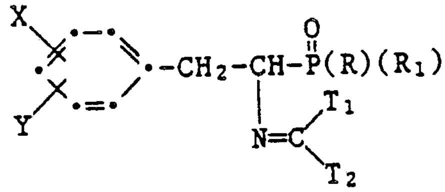

en présence d'un catalyseur, avec traitement ultérieur avec un acide minéral à une température augmentée, dans la mesure où R et/ou $R_1$ représentent un alcoxy et sont transformés en un groupe hydroxy, R, $R_1$, X et Y dans les formules des produits intermédiaires précitées ayant la signification donnée pour la formule I et R et $R_1$ pouvant également représenter un alcoxy en $C_1$—$C_4$, tandis que $T_1$ représente l'hydrogène ou un reste aliphatique ou aromatique et $T_2$ représente un reste aliphatique ou aromatique et Hal représente un atome d'halogène.

9. Composés de formule I selon la revendication 1 et leurs sels où au moins l'un des substituants X ou Y a une signification différente de l'hydrogène, dans la mesure où R et $R_1$ sont en même temps l'hydroxy.

10. Composés de formule I, selon la revendication 2.

11. Composés de formule I, selon la revendication 3.

12. Composés de formule I, selon la revendication 4.

13. L'acide 1-amino-2-(4-tolyl)-éthanephosphonique.

14. L'acide 1-amino-2-(4-fluorophényle)-éthanephosphonique.

15. Procédé pour la lutte contre une infestation par des microorganismes pathogènes de plantes cultivées ou pour la prévention d'une telle infestation, caractérisé en ce que l'on applique un composé de formule I selon la revendication 1 sur la plante, sur des parties de la plante ou sur son emplacement.

16. Procédé selon la revendication 15, caractérisé en ce que les parties de la plante à traiter sont les semences.

**Revendications pour l'Etat contractant: AT**

1. Composition microbicide contenant comme au moins une substance active un composé de formule I

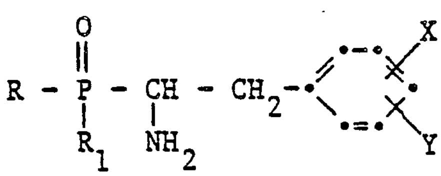

(I),

où

R représente un alkyle en $C_1$—$C_4$ ou OH,

$R_1$ OH

X l'hydrogène, un halogène, un alkyle en $C_1$—$C_4$, un alcoxy en $C_1$—$C_4$, $Si(CH_3)_3$, —CN, —$COOCH_3$ ou —$CH_2$—$CH(NH_2)$—$P(O)(R)(R_1)$ et

Y l'hydrogène, un halogène, un halogénométhoxy, un halogénoéthoxy ou un halogénométhyle, y compris les sels correspondants; associé à un support approprie et/ou un agent mouillant, un agent mouillant étant toujours présent, lorsque la substance active de formule I a en même temps les significations $R=R_1=OH$ et X=Y=hydrogène.

2. Composition selon la revendication 1, contenant un composé de formule I où

$R=R_1=OH$,

X représente l'hydrogène, le fluor, le chlore ou le brome, un alkyle en $C_1$—$C_4$, $CH_3O$, $Si(CH_3)_3$, —CN, —$COOCH_3$ ou —$CH_2$—$CH(NH_2)$—$P(O)(OH)_2$ et

Y représente le fluor, le chlore, le brome, un halogénométhoxy ou un halogénométhyle.

3. Composition selon la revendication 2, contenant un composé de formule I où au moins l'un des deux substituants X et Y représente un halogène ou contient un halogène.

4. Composition selon la revendication 3, contenant un composé de formule I où l'un des deux substituants X et Y représente le fluor ou contient le fluor.

5. Composition selon la revendication 1, contenant comme substance active l'acide 1-amino-2-(4-tolyl)-éthanephosphonique.

6. Composition selon la revendication 1, contenant comme substance active l'acide 1-amino-2-phényl-éthanephosphonique.

7. Composition selon la revendication 1, contenant comme substance active l'acide 1-amino-2-(4-fluorophényl)-éthanephosphonique.

8. Procédé de préparation des composés de formule I

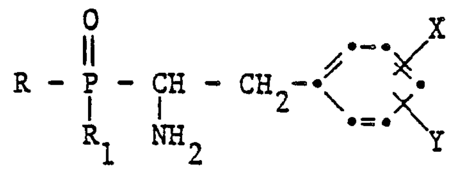

(I),

où

R représente un alkyle en $C_1$—$C_4$ ou OH,

$R_1$ OH,

X l'hydrogène, un halogène, un alkyle en $C_1$—$C_4$, un alcoxy en $C_1$—$C_4$, $Si(CH_3)_3$, —CN, —$COOCH_3$ ou —$CH_2$—$CH(NH_2)$—$P(O)(R)(R_1)$ et

Y l'hydrogène, un halogène, un halogénométhoxy, un halogénoéthoxy ou un halogénométhyle, au moins l'un des substituants X et Y ayant une signification différente de l'hydrogène, dans la mesure où R et $R_1$ sont en même temps l'hydroxy,

caractérisé en ce que l'on active $CH_2$ dans une base de Schiff de formule

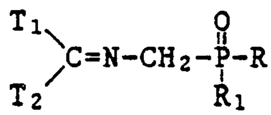

puis en ce que l'on aralkyle avec un halogénure de benzyle substitué de façon correspondante de formule

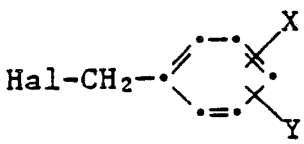

et en ce que l'on clive par hydrogénolyse le produit intermédiaire formé de formule

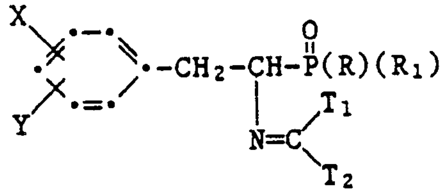

en présence d'un catalyseur, avec traitement ultérieur avec un acide minéral à une température augmentée, dans la mesure où R et/ou $R_1$ représentent un alcoxy et sont transformés en un groupe hydroxy, R, $R_1$, X et Y dans les formules des produits intermédiaires précitées ayant la signification donnée pour la formule I et R et $R_1$ pouvant également représenter un alcoxy en $C_1$—$C_4$, tandis que $T_1$ représente l'hydrogène ou un reste aliphatique ou aromatique et $T_2$ représente un reste aliphatique ou aromatique et Hal représente un atome d'halogène.

9. Procédé pour la lutte contre une infestation par des microorganismes pathogènes des plantes cultivées ou pour la prévention d'une telle infestation, caractérisé en ce que l'on applique un composé de formule I selon la revendication 1 sur la plante, sur des parties de la plante ou sur son emplacement.

10. Procédé selon la revendication 9, caractérisé en ce que les parties de la plante à traiter sont les semences.

**Claims for the Contracting States: BE CH DE FR GB IT LI LU NL SE**

1. A microbicidal agent containing as at least one active ingredient a compound of the formula I

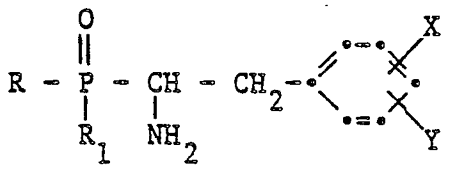

(I),

in which

R is $C_1$—$C_4$alkyl or OH,

$R_1$ is OH

X is hydrogen, halogen, $C_1$—$C_4$alkyl, $C_1$—$C_4$alkoxy, $Si(CH_3)_3$, —CN, —$COOCH_3$ or —$CH_2$—$CH(NH_2)$—$P(O)(R)(R_1)$ and

Y is hydrogen, halogen, halomethoxy, haloethoxy or halomethyl, with the inclusion of the corresponding salts; together with a suitable carrier and/or wetting agent, a wetting agent always being present, if the active ingredient of the formula I simultaneously has the meanings $R=R_1=OH$ and X=Y=hydrogen.

2. An agent according to claim 1, containing a compound of the formula I in which

$R=R_1=OH$,

X is hydrogen, fluorine, chlorine or bromine, $C_1$—$C_4$alkyl, $CH_3O$, $Si(CH_3)_3$, —CN, —$COOCH_3$ or —$CH_2$—$CH(NH_2)$—$P(O)(OH)_2$ and

Y is fluorine, chlorine, bromine, halomethoxy or halomethyl.

3. An agent according to claim 2, containing a compound of the formula I in which at least one of the two substituents X and Y is halogen or contains halogen.

4. An agent according to claim 3, containing a compound of the formula I in which one of the two substituents X and Y is fluorine or contains fluorine.

5. An agent according to claim 1, containing 1-amino-2-(4-tolyl)-ethanephosphonic acid as active ingredient.,

6. An agent according to claim 1, containing 1-amino-2-phenyl-ethanephosphonic acid as active ingredient.

7. An agent according to claim 1, containing 1-amino-2-(4-fluorophenyl)-ethanephosphonic acid as active ingredient.

8. A process for the preparation of a compound of the formula I

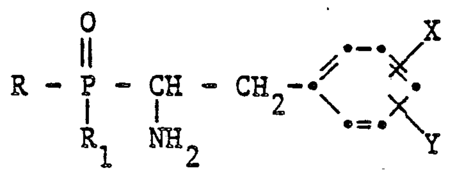

(I),

in which

R is $C_1$—$C_4$alkyl or OH,

$R_1$ is OH,

X is hydrogen, halogen, $C_1$—$C_4$alkyl, $C_1$—$C_4$alkoxy, $Si(CH_3)_3$, —CN, —$COOCH_3$ or —$CH_2$—$CH(NH_2)$—$P(O)(R)(R_1)$ and

Y is hydrogen, halogen, halomethoxy, haloethoxy or halomethyl, at least one of the substituents X and Y having a meaning different from hydrogen, provided R and $R_1$ are simultaneously hydroxyl, which process comprises activating the $CH_2$ group of a Schiff's base of the formula

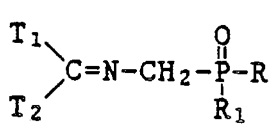

then aralkylating the activated base with a suitably substituted benzyl halide of the formula

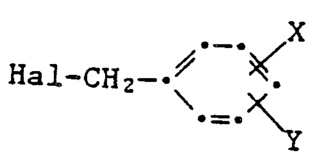

and cleaving the resulting intermediate of the formula

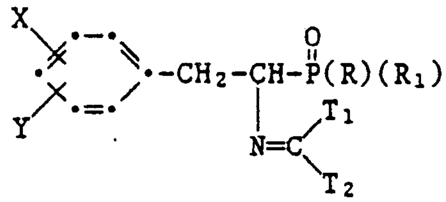

hydrogenolytically in the presence of a catalyst, with further treatment with a mineral acid at elevated temperature, provided R and/or $R_1$ are alkoxy and are converted into a hydroxyl group, R, $R_1$, X and Y in the intermediates of the above formulae being as defined for formula I and it being possible for each of R and $R_1$ also to be $C_1$—$C_4$alkoxy, while $T_1$ is hydrogen or an aliphatic or aromatic radical and $T_2$ is an aliphatic or aromatic radical and Hal is a halogen atom.

9. A compound of the formula I according to claim 1 or a salt thereof, where at least one of the substituents X or Y has a meaning different from hydrogen, provided R and $R_1$ are simultaneously hydroxyl.

10. A compound of the formula I according to claim 2.

11. A compound of the formula I according to claim 3.

12. A compound of the formula I according to claim 4.

13. 1-amino-2-(4-tolyl)-ethanephosphonic acid.

14. 1-amino-2-(4-fluorophenyl)-ethanephosphonic acid.

15. A method of controlling or preventing an attack by pathogenic microorganisms on cultivated plants, which comprises applying a compound of the formula I according to claim 1 to the plant, to parts of plants or to the locus thereof.

16. A method according to claim 15, wherein the parts of plants to be treated are seeds.

**Claims for the Contracting State: AT**

1. A microbicidal agent containing as at least one active ingredient a compound of the formula I

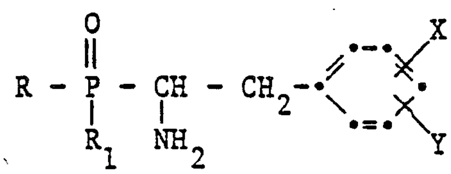

(I),

in which

R is $C_1$—$C_4$alkyl or OH,

$R_1$ is OH

X is hydrogen, halogen, $C_1$—$C_4$alkyl, $C_1$—$C_4$alkoxy, $Si(CH_3)_3$, —CN, —$COOCH_3$ or —$CH_2$—$CH(NH_2)$—$P(O)(R)(R_1)$ and

Y is hydrogen, halogen, halomethoxy, haloethoxy or halomethyl, with the inclusion of the corresponding salts; together with a suitable carrier and/or wetting agent, a wetting agent always being present, if the active ingredient of the formula I simultaneously has the meanings $R=R_1=OH$ and X=Y=hydrogen.

2. An agent according to claim 1, containing a compound of the formula I in which

$R=R_1=OH$,

X is hydrogen, fluorine, chlorine or bromine, $C_1$—$C_4$alkyl, $CH_3O$, $Si(CH_3)_3$, —CN, —$COOCH_3$ or —$CH_2$—$CH(NH_2)$—$P(O)(OH)_2$ and

Y is fluorine, chlorine, bromine, halomethoxy or halomethyl.

3. An agent according to claim 2, containing a compound of the formula I in which at least one of the two substituents X and Y is halogen or contains halogen.

4. An agent according to claim 3, containing a compound of the formula I in which one of the two substituents X and Y is fluorine or contains fluorine.

5. An agent according to claim 1, containing 1-amino-2-(4-tolyl)-ethanephosphonic acid as active ingredient.,

6. An agent according to claim 1, containing 1-amino-2-phenyl-ethanephosphonic acid as active ingredient.

7. An agent according to claim 1, containing 1-amino-2-(4-fluorophenyl)-ethanephosphonic acid as active ingredient.

8. A process for the preparation of a compound of the formula I

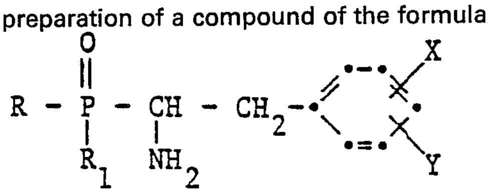

(I),

in which

R is $C_1$—$C_4$alkyl or OH,

$R_1$ is OH,

X is hydrogen, halogen, $C_1$—$C_4$alkyl, $C_1$—$C_4$alkoxy, $Si(CH_3)_3$, —CN, —$COOCH_3$ or —$CH_2$—$CH(NH_2)$—$P(O)(R)(R_1)$ and

Y is hydrogen, halogen, halomethoxy, haloethoxy or halomethyl, at least one of the substituents X and Y having a meaning different from hydrogen, provided R and $R_1$ are simultaneously hydroxyl, which process comprises activating the $CH_2$ group of a Schiff's base of the formula

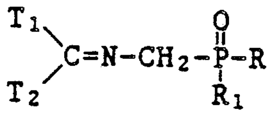

then aralkylating the activated base with a suitably substituted benzyl halide of the formula

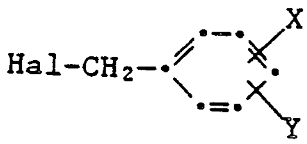

and cleaving the resulting intermediate of the formula

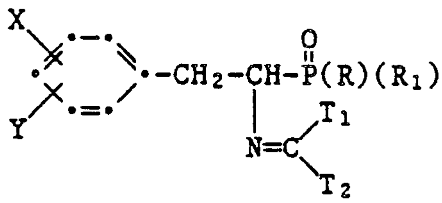

hydrogenolytically in the presence of a catalyst, with further treatment with a mineral acid at elevated temperature, provided R and/or $R_1$ are alkoxy and are converted into a hydroxyl group, R, $R_1$, X and Y in the intermediates of the above formulae being as defined for formula I and it being possible for each of R and $R_1$ also to be $C_1$—$C_4$alkoxy, while $T_1$ is hydrogen or an aliphatic or aromatic radical and $T_2$ is an aliphatic or aromatic radical and Hal is a halogen atom.

9. A method of controlling or preventing an attack by pathogenic microorganisms on cultivated plants, which comprises applying a compound of the formula I according to claim 1 to the plant, to parts of plants or to the locus thereof.

10. A method according to claim 9, wherein the parts of plants to be treated are seeds.